Europäisches Patentamt

European Patent Office

Office européen des brevets

(11) Veröffentlichungsnummer: **0 058 247**
**B1**

(12) **EUROPÄISCHE PATENTSCHRIFT**

(45) Veröffentlichungstag der Patentschrift:
23.10.85

(21) Anmeldenummer: 81109916.7

(22) Anmeldetag: 26.11.81

(51) Int. Cl.⁴: **C 02 F 3/28, B 01 D 19/02**

(54) Verfahren zur anaeroben Reinigung von mit organischen Stoffen belasteten Flüssigkeiten und Anlage zur Durchführung des Verfahrens.

(30) Priorität: 09.02.81 CH 835/81

(43) Veröffentlichungstag der Anmeldung:
25.08.82 Patentblatt 82/34

(45) Bekanntmachung des Hinweises auf die Patenterteilung:
23.10.85 Patentblatt 85/43

(84) Benannte Vertragsstaaten:
AT BE CH DE FR GB IT LI NL

(56) Entgegenhaltungen:
EP - A - 0 046 091
EP - A - 0 057 152
DE - A - 1 805 360
GB - A - 1 411 659
GB - A - 1 491 502

(73) Patentinhaber: **GEBRÜDER SULZER AKTIENGESELLSCHAFT**, Zürcherstrasse 9, CH-8401 Winterthur (CH)

(72) Erfinder: **Treutler, Kurt, Taunusstrasse 7, D-6308 Butzbach (DE)**
Erfinder: **Hasenböhler, Anton, Dr. Dipl.-Ing., Steigstrasse 11, CH-8406 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

BUNDESDRUCKEREI BERLIN

## Beschreibung

Die Erfindung betrifft ein Verfahren zur anaeroben Reinigung von mit organischen Stoffen belasteten Flüssigkeiten, insbesondere von Abwässern, wobei die organischen Stoffe mindestens teilweise mit Hilfe anaerober Mikroorganismen in einem Reaktionsraum abgebaut werden, wodurch ein Mehrphasen-Reaktionsgemisch aus mindestens biologisch aktivem Schlamm und der gereinigten Flüssigkeit erzeugt wird, und wobei ferner die gereinigte Flüssigkeit aus dem Reaktionsraum abgezogen wird; weiterhin betrifft die Erfindung eine Anlage zur Durchführung des Verfahrens.

Der anaerobe mikrobielle Abbau von organischen Stoffen in Flüssigkeiten und/oder Flüssigkeits-Feststoff-Gemischen wird in sogenannten Faulanlagen vorgenommen; er erfolgt durch fakultativ anaerobe und/oder streng anaerobe Mikroorganismen in einer oder mehreren Stufen oder Reaktionsräumen, wobei als Endprodukte im allgemeinen Wasser, Faulgas und sogenannte Biomasse, d. h. die Mikroorganismen enthaltender Schlamm, entstehen. Wegen der sehr geringen Wachstumsgeschwindigkeiten der für einen anaeroben Abbau benötigten Mikroorganismen ist man bestrebt, diese soweit wie möglich in ihrem aktiven Zustand im Reaktionsraum zurückzuhalten.

Ein wesentlicher Schritt jedes anaeroben Reinigungsverfahrens ist daher die unter Wahrung des anaeroben Zustandes durchzuführende Trennung der entstehenden Endprodukte, wobei sowohl die gereinigte Flüssigkeit von der Biomasse als auch beide von den Reaktionsgasen möglichst vollständig getrennt werden sollen. Für die Trennung Flüssigkeit/Biomasse werden bisher konventionelle Sedimentationseinrichtungen — in der GB-A 1 411 659 beispielsweise in Schrägklärer — verwendet, die in den Faulbehälter integriert oder außerhalb der eigentlichen Faulanlage aufgestellt sein können. Probleme entstehen dabei bei der Abtrennung der Gasphase und bei der Aufrechterhaltung und der Rückführung aktiver Biomasse in der bzw. aus der Sedimentationseinrichtung, die darüber hinaus bei tragbaren Verweilzeiten schlechte Wirkungsgrade hat und störanfällig ist; so ist es beispielsweise bei sogenannten Schlammentartungen nicht möglich, bei der erwähnten Anlage die Biomasse im Faulbehälter zurückzuhalten.

Weiterhin ist aus der GB-A 1 491 502 eine Anlage für die anaerobe Reinigung von Abwässern bekannt, bei der Schlamm und Flüssigkeit gemeinsam aus dem Reaktionsraum weggeführt, einer Kühlung unterworfen und über eine Verteilvorrichtung in einen Schwerkraftabscheider eingespeist werden. Dort wird der Schlamm teilweise separiert, während anschließend die restliche Trennung in einer aus Füllkörpern bestehenden Schicht durchgeführt wird. Der lange Weg vom Ende des Reaktionsraumes bis zu der Füllkörperschicht sowie die Kühlung des Gemisches aus Flüssigkeit und Feststoffen bewirken, daß die Biomasse, die in den Reaktionsraum zurückgeführt wird, weitgehend tot und nicht mehr aktiv ist.

In der Zeitschrift »Biotechnology and Bioengineering«, Vol. 12 (1980), Seiten 699—734, ist eine sogenannte UASB-Versuchsanlage beschrieben worden, bei der in einem den Reaktionsraum bildenden Strahlbehälter nach oben ein bezüglich der biologischen Reaktionen weitgehend inaktiver Trennraum anschließt, der haubenartig angeordnete Schikanen enthält; durch diese Schikanen wird die gereinigte, mit Gas und Biomasse beladene Flüssigkeit zunächst in einen zentral angeordneten Auffangbecher für das Gas geleitet. Aus dessen peripherem Bereich fließt die entgaste Flüssigkeit dann nach einer Umlenkung um 180° in ein Absetzabteil, das den Auffangbecher außen ringförmig umgibt. Durch die Beruhigung der Strömung und das Verweilen im Absetzabteil sowie die vorausgehende Umlenkung wird aus der entgasten Flüssigkeit die Biomasse separiert, die von den schräg abwärts gerichteten Schikanen in den Reaktionsraum zurückgeführt wird; die Schikanen bilden dabei eine Sperre gegen das Eindringen gasbeladenen Reaktionsgemisches in das Sedimentationsabteil und bewirken gleichzeitig eine Trennung der abwärts fließenden, separierten Biomasse von dem im Inneren aufsteigenden Gemisch.

Diese Anlage, die besonders bei starker Gasentwicklung nur eine geringe Belastbarkeit — das ist das Produkt aus Durchsatzmenge und Belastung pro Mengeneinheit — hat, erfordert nicht nur einen hohen anlagemäßigen Aufwand, sondern neigt auch zum Verstopfen; darüber hinaus ist ihre Trennwirkung relativ gering, da in der gereinigten Flüssigkeit dabei immer noch einige Hundert mg/l Biomasse verbleiben, was eine kostspielige Nachreinigung notwendig macht und zu erheblichen Verlusten an Biomasse führt.

In den EP-A-0 046 901 und 0 057 152 werden anaeroben Reinigungsverfahren und Anlagen dafür beschrieben, bei denen die Biomasse an mit offenen Poren versehenes Trägermaterial gebunden ist, das unter Umständen im Zustand eines expandierenden oder Wirbelbettes gehalten wird.

Aufgabe der Erfindung ist es, die bei den bisherigen Verfahren für die Trennung der Reaktionsprodukte auftretenden Verluste an aktiver Biomasse möglichst zu reduzieren und den für die Durchführung der Trennung notwendigen apparativen oder anlageseitigen Aufwand zu verringern.

Der Verlust an aktiver lebendiger Biomasse wird dabei erfindungsgemäß dadurch verringert, daß in der abgezogenen Flüssigkeit mitgeführte Schwebstoffe bereits am Ende des von porösem Trägermaterial für Biomasse freien Reaktionsraumes mit Hilfe einer Schicht aus unter der Flüssigkeitsoberfläche gehaltenen Füllkörpern mit glatten Oberflächen zurückgehalten werden.

Infolgedessen ist eine Anlage zur Durchführung des Verfahrens dadurch gekennzeichnet, daß der Ausgang des von porösem Trägermaterial für Biomasse freien Reaktionsraumes für die gereinigte Flüssigkeit durch ein Schicht aus Füllkörpern mit glatten Oberflächen abgeschlossen ist.

Bei dem neuen Verfahren verläßt die Biomasse den biologischen Reaktionsraum praktisch nicht, so daß sie für die biologischen Prozesse dauernd zur Verfügung steht; weiterhin erfolgt in der Füllkörperschicht eine zwangsweise Abtrennung der Feststoffe von der Flüssigkeit.

Als besonders zweckmäßig hat sich eine Führung des Verfahrens erwiesen, bei der die Schwebstoffe und gegebenenfalls daran haftende Gasblasen in der Schicht voneinander separiert werden.

Bei heftiger Gasentwicklung besteht die Gefahr, daß der Gasdruck unzulässig ansteigt und — bei explosionsartigen Gasdurchbrüchen — Schwebstoffe von den Gasblasen durch die Füllkörperschicht hindurch mitgerissen werden, wobei Biomasse verlorengeht und die gereinigte Flüssigkeit erneut verschmutzt wird; dies kann verhindert werden, wenn ein Abtrennen von in der Flüssigkeit enthaltenen Gasen vor der Abscheidung der Schwebstoffe durchgeführt wird.

Das neue Verfahren kann darüber hinaus verbessert werden, wenn die Füllkörperschicht periodisch gereinigt wird.

Verwendet man schwimmfähige Füllkörper, die in der Flüssigkeit untergetaucht gehalten sind, so bringt dies den Vorteil, daß für sie keine bodenartige, gas- und flüssigkeitsdurchlässige Auflagefläche erforderlich ist, die — weil sie unterhalb der Füllkörperschicht liegen müßte — besonders leicht, beispielsweise durch in den Durchtritten für Gas und Flüssigkeit wachsende Organismen, verstopfen würde. Untergetaucht können die schwimmfähigen Füllkörper, die mit Vorteil Korngrößen bzw. Durchmesser von 0,5 bis 50 mm haben, durch ein unterhalb des Flüssigkeitsspiegels ausgespanntes Netz, durch ein dort angebrachtes Gitter oder durch ein Lochblech fixiert werden. Um Netze, Gitter oder Lochbleche mit einer relativ großen Maschenweite versehen zu können, die ein Verstopfen oder Zuwachsen erschwert, ist es vorteilhaft, wenn die Schicht aus Füllkörpern mit unterschiedlichen Körnungen besteht, wobei die Körnung entgegen der Strömungsrichtung der Flüssigkeit abnimmt.

Weitere Vorteile der Erfindung sind:

— Durch die — gegenüber Sedimentationsanlagen — bessere Retentionsleistung wird der Schwebstoffgehalt in der abgezogenen Flüssigkeit um mindestens eine Größenordnung reduziert; die dadurch erreichte Anreicherung an aktiver Biomasse ermöglicht einen kontrollierten Schlammabzug, beispielsweise über ein Ablaufventil;

— die durch die höhere Retentionsleistung erzielte erhöhte Konzentration an Biomasse erlaubt darüber hinaus für gleiche Durchsatzmengen und Belastungen die Anlage kompakter zu bauen;

— weiterhin bringt der geringe Suspensagehalt in der abgezogenen Flüssigkeit für das nachgeschaltete Reinigungsverfahren, wie z. B. eine aerobe Belebtschlammanlage, verfahrensmäßige und/oder anlageseitige Vorteile, wie z. B. Wegfall einer Zwischenreinigung und/oder geringeren Sauerstoffbedarf sowie kleinere Volumina der nachfolgenden Anlage;

— wesentlich einfacherer Aufbau der Faulanlage durch Wegfall der konventionellen Sedimentationseinrichtung;

— durch den Wegfall der Sedimentationseinrichtung, deren Volumen nicht zur biologischen aktiven Reaktionszone gehört, erhöht sich der Raumausnützungsgrad des biologisch aktiven Reaktionsvolumens am gesamten Flüssigkeitsvolumen der Faulanlage;

— für die Rückführung der Biomasse sind keine für die Organismen möglicherweise schädlichen Pumpen erforderlich;

— das neue Verfahren erlaubt — abgesehen von Zeiten einer unter Umständen notwendigen Reinigung der Füllkörperschicht — einen kontinuierlichen Betrieb der Anlage.

Im folgenden wird die Erfindung anhand von Ausführungsbeispielen im Zusammenhang mit der Zeichnung näher erläutert.

Fig. 1 zeigt im Längsschnitt schematisch einen Reaktionsbehälter, der erfindungsgemäß ausgerüstet ist, sowie symbolisch weitere, für die Durchführung des Verfahrens benötigte Anlageteile;

Fig. 2 ist eine Ansicht auf den leeren Behälter nach Fig. 1;

Fig. 3a und 3b geben in gleicher Darstellung wie Fig. 1 zwei weitere Ausführungsformen eines Reaktionsbehälters wieder, wobei

Fig. 4a und 4b wiederum die Aufsicht auf die Behälter nach Fig. 3 darstellen.

Das erfindungsgemäße Verfahren sei an einer anaeroben Reinigung von melassehaltigem Abwasser erläutert, wie es beispielsweise bei der Hefefabrikation entsteht; dieses der gezeigten Anlage zufließende Abwasser ist bereits einer Vorklärung unterworfen worden, beispielsweise durch ein Sedimentationsbecken oder durch Trennsiebe geflossen, um nicht abbaubare, feste Schmutzstoffe sowie grobe Verunreinigungen zu entfernen.

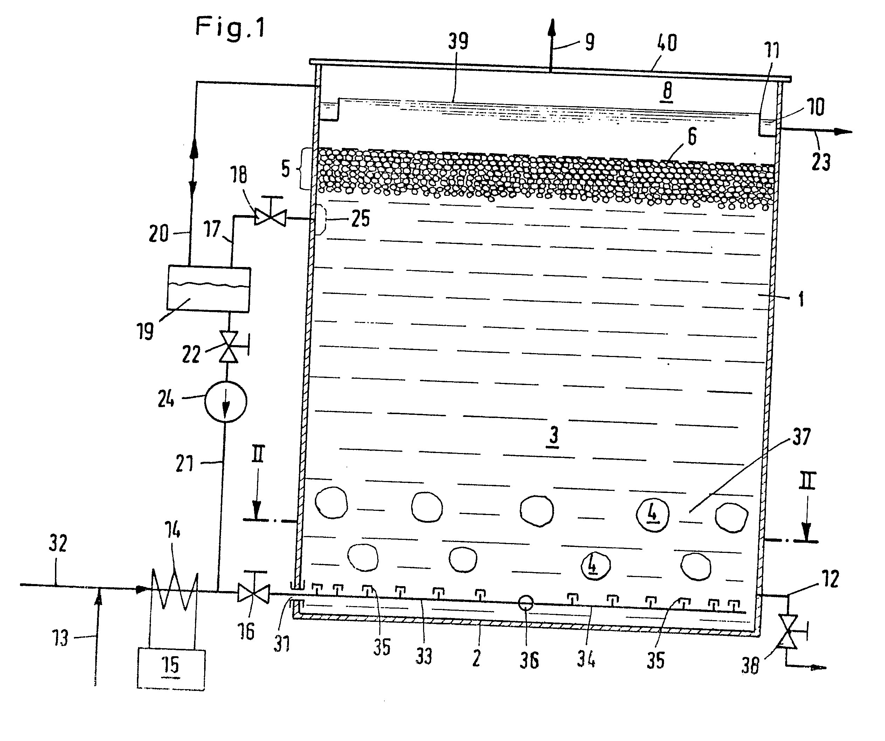

Der beispielsweise aus Stahlblech hergestellte zylindrische Reaktionsbehälter 1 (Fig. 1) ist durch einen Rohrstutzen 31, der in der Nähe des Behälterbodens in der Behälterwand angeordnet ist, mit der Rohwasserzuleitung 32 verbunden, in der ein Absperrorgan 16 vorgesehen ist. Auf der Innenseite der Behälterwand schließt an den Rohrstutzen 31 ein Gleichverteilungssystem für das Rohwasser an; dieses besteht aus der bis zur Mitte 36 führenden Zuführleitung 33, von der aus Verteilleitungen 34 strahlenförmig nach allen Seiten verlaufen. Die Leitungen 33 und 34 sind beispielsweise mit Rohrschellen am Boden des Behälters 1 befestigt.

Die Aufgabe des Gleichverteilungssystems ist es, dafür zu sorgen, daß der ganze Querschnitt des Reaktionsbehälters 1 über die ganze Höhe als Reaktionsraum 3 bestmöglich ausgenützt wird. Zu diesem Zweck dient zum einen die Anordnung des Gleichverteilungssystems unmittelbar über dem Boden 2 des Behälters 1; zum zweiten sind die Rohre der Leitungen 33 und 34 deshalb mit kalibrierten Austritten für das Rohwasser, beispielsweise mit Düsen 35, und/oder mit Austritten in kalibrierten Abständen versehen.

Der für die anaeroben biologischen Prozesse zur Verfügung stehende Reaktionsraum 3 erstreckt sich auf diese Weise praktisch vom Boden 2 des Behälters 1 zu einer erfindungsgemäß nahe seinem Deckel angeordneten Füllkörperschicht 5.

Im vorliegenden Beispiel besteht die Füllkörperschicht 5 aus Kugeln aus thermoplastischem Kunststoff, z. B. aus handelsüblichen Polypropylen-Kugeln mit einem Durchmesser von 10 bis 20 mm, die beispielsweise eine Schichtstärke von etwa 10 cm haben. Die Oberflächen der Füllkörper sind glatt ausgebildet.

Die Füllkörperschicht 5 bildet erfindungsgemäß das Ende des Reaktionsraumes 3; der darüber liegende Rest des Behältervolumens ist durch einen Bereich 7 ausgefüllt, in dem durch eine in ein Abzugssystem 10 führende Überlaufkante 11 für die gereinigte Flüssigkeit ein Flüssigkeitsspiegel 39 gehalten wird. Der Flüssigkeitsspiegel 39 grenzt an einen Gasraum 8, in den hinein die Trennung der Reaktionsgase von der gereinigten Flüssigkeit stattfindet. Die Gase werden über eine Leitung 9 im Deckel 40 des Behälters 1 einer weiteren Verwendung zugeführt, während die Flüssigkeit den Behälter über die ringförmige Abzugsrinne 10 und eine Leitung 23 verläßt.

Weiterhin zweigt aus dem Reaktionsraum 3 wenig unterhalb der Füllkörperschicht 5 eine mit einem Absperrorgan 18 versehene Leitung 17a, die in einen Stapelbehälter 19 führt. Dieser ist gleichzeitig über eine Druckausgleichsleitung 20 mit dem Gasraum 8 verbunden. Aus seinem Boden führt eine mit einem Absperrorgan 22 und einer Pumpe 24 versehene Leitung 21 vor dem Absperrorgan 16 in die Rohwasserleitung 32.

Vor der Einmündung der Leitung 17 in den Behälter 1 ist ein Siebkorb 25 angebracht, dessen Maschenweite so gewählt ist, daß Füllkörper der Schicht 5 nicht durch diesen hindurch treten können.

Die Funktion des Rückführsystems 17, 19, 21 wird später beschrieben.

Da erfindungsgemäß die Füllkörperschicht 5 leichter als das aufströmende Wasser ist, wird sie durch ein Drahtnetz 6, mit beispielsweise einer Maschenweite von 5 mm, zwangsweise unter dem Flüssigkeitsspiegel 39 fixiert.

Unter Umständen muß das in dem Reaktionsraum 3 zu behandelnde Rohwasser mit Nährstoffen, insbesondere mit Phosphor und Stickstoff, angereichert werden, um den biologischen Prozeß unbegrenzt betreiben zu können; die Zugabe dieser Nährstoffe kann beispielsweise über eine in die Roh- oder Abwasserzuleitung 32 mündende Dosierleitung 13 erfolgen. Die für die Dosierung der Nährstoffe notwendigen Dosiereinrichtungen sind nicht dargestellt.

Das, wie beschrieben, vorbehandelte Rohwasser tritt aus den Düsen 35 in den Reaktionsraum 3 aus, der mit Biomasse 37 gefüllt ist. Diese besteht aus Faulschlamm, der mindestens methanogene und azetogene Mikroorganismen enthält. Aufgrund ihrer Dichte ist die Biomasse 37 klassiert, d. h. im unteren Teil des Reaktionsraumes 3 konzentrierter als im oberen Teil. Daher kommt das Rohwasser sofort mit einer großen Menge 37 in innigen Kontakt — der Prozeß kann somit schneller ablaufen als bei einer gleichmäßig verteilten Biomasse 37; im oberen Bereich des Reaktionsraumes 3 steht eine geringere Menge 37 zur Verfügung, ist aber auch ein geringerer Anteil abbaubarer Substanzen vorhanden, da bereits ein Teil der abbaubaren Stoffe des Rohwassers vor diesem Bereich abgebaut worden ist.

Falls zur Beschleunigung der Abbauprozesse erforderlich, kann die Temperatur des Rohwassers angehoben werden; dazu dient ein Wärmetauscher 14 in der Rohwasserzuleitung 32, der beispielsweise durch ein Heizmedium beschickt wird, das in einem gasbefeuerten Heizkessel 15 aufgeheizt wird. Die Temperatur des in den Behälter 1 eintretenden Rohwassers wird dadurch z. B. auf 35° C erhöht.

Im Reaktionsraum 3 erfolgt eine erste Durchmischung der dort befindlichen Biomasse 37 mit dem Rohwasser durch dessen aufwärts gerichtete Strömung und die dadurch erzeugten Bewegungen; weiterhin findet eine innige Mischung durch das entstehende Reaktions- oder Faulgas statt, das zum Teil als Gasblasen 4 mit relativ großer Geschwindigkeit nach oben aufsteigt und dabei einen Flotationseffekt bewirkt.

Die so in der Flüssigkeit mitgeführten Schwebstoffe, die praktisch ein Teil der Biomasse 37 sind, werden von der aufwärts gerichteten Flüssigkeitsströmung in den oberen Teil des Reaktionsraumes 3 bis in die Füllkörperschicht 5 hinein mitgeführt. Diese Füllkörperschicht 5 hat, wie mehrfach geschildert, die Aufgabe, die Biomasse 37 von der Flüssigkeit und dem Reaktionsgas zu trennen, so daß sie im Reaktionsraum 3 zurückgehalten wird.

Das von der Biomasse 37 weitestgehend befreite Flüssigkeits-Gasgemisch trennt sich — nach teilweiser Trennung bereits in der Füllkörperschicht 5 — im wesentlichen im Bereich 7 oberhalb der Füllkörperfixierung 6, wobei sich das Gas im Gasraum 8 sammelt und durch die Rohrleitung 9 einer weiteren Verwendung, beispielsweise einer Verbrennung im Heizkessel 15, zugeführt wird. Die Flüssigkeit verläßt den Behälter 1 über das Abzugssystem 10 und die Rohrleitung 23.

Es hat sich als vorteilhaft erwiesen, in periodischen Zeitabständen eine Reinigung der Füllkörper 5 durchzuführen; hierfür ist beispielsweise das folgende Vorgehen wirksam:

Sobald eine Reinigung der Füllkörperschicht 5 erforderlich ist, wird der Rohwasserzufluß unterbrochen und das Absperrorgan 16 geschlossen; anschließend öffnet man das Organ 18, wodurch ein kleiner Teil des Inhaltes des Reaktionsraumes 3 über die Rohrleitung 17 in den Stapelbehälter 19 abfließt. Als Druckausgleich dient die Rohrleitung 20 zwischen dem Gasraum 8 und dem Stapelbehälter 19. Durch den absinkenden Wasserspiegel 39 und den Wegfall des Auftriebs sinkt die Füllkörperschicht 5 ab. Sie wird dabei aufgelockert, so daß in ihr festgehaltene Biomasse 37 in den unteren Teil des Reaktionsraums 3 zurückfällt. Ein Verlust an Füllkörpern wird durch den vor der Rohrleitung 17 angebrachten Siebkorb 25 vermieden.

Nach der Reinigung der Füllkörperschicht 5 durch das Ablösen und Absinken der Biomasse 37 wird das Ventil 18 wieder geschlossen und das Ventil 22 geöffnet. Nach Öffnen des Ventils 16 und des Rohwasserzuflusses in der Leitung 1 wird dann die Rückführpumpe 24, die das gespeicherte Volumen des Speicherbehälters 19 durch die Rohrleitung 21 in den Reaktionsraum 3 fördert, in Betrieb gesetzt. Sobald der Stapelbehälter 19 leer ist, werden die Rückführpumpe 24 abgeschaltet und das Ventil 22 geschlossen; damit ist die Reinigungsphase für die Füllkörperschicht 5 beendet und die Anlage arbeitet wieder im Normalbetrieb. Eventuell erzeugter Überschußschlamm kann aus dem Reaktionsraum 3 über eine mit einem Ablaufventil 38 versehene Leitung erfolgen.

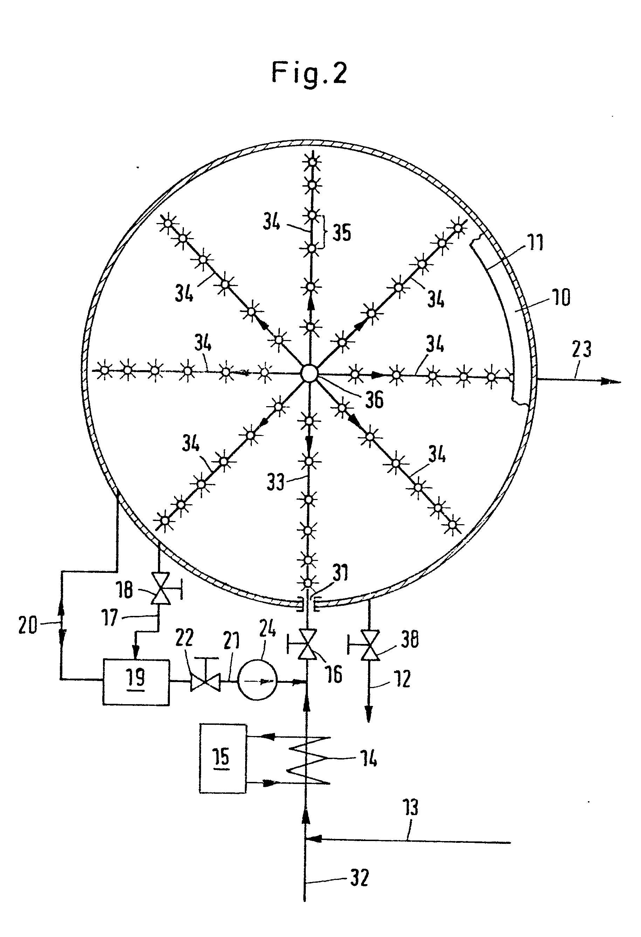

Bekanntlich sind in anaeroben Reaktionsgefäßen die Fließgeschwindigkeit der schwebstoffbeladenen Flüssigkeit und die Aufstiegsgeschwindigkeit von Gasen sehr stark verschieden; das Aufsteigen der Gasblasen erfolgt beispielsweise 3000 bis 4000mal schneller als das Aufsteigen der Flüssigkeit. Bei einer Anlage gemäß Fig. 1 und 2 könnten daher der Gasdruck unzulässig ansteigen und von den aufsteigenden Gasen — beispielsweise bei explosionsartigen Durchbrüchen — unter Umständen Schwebstoffe durch die Füllkörperschicht 5 hindurch mitgerissen werden; diese Schwebstoffe gelangen so in die gereinigte Flüssigkeit und sind als Biomasse verloren.

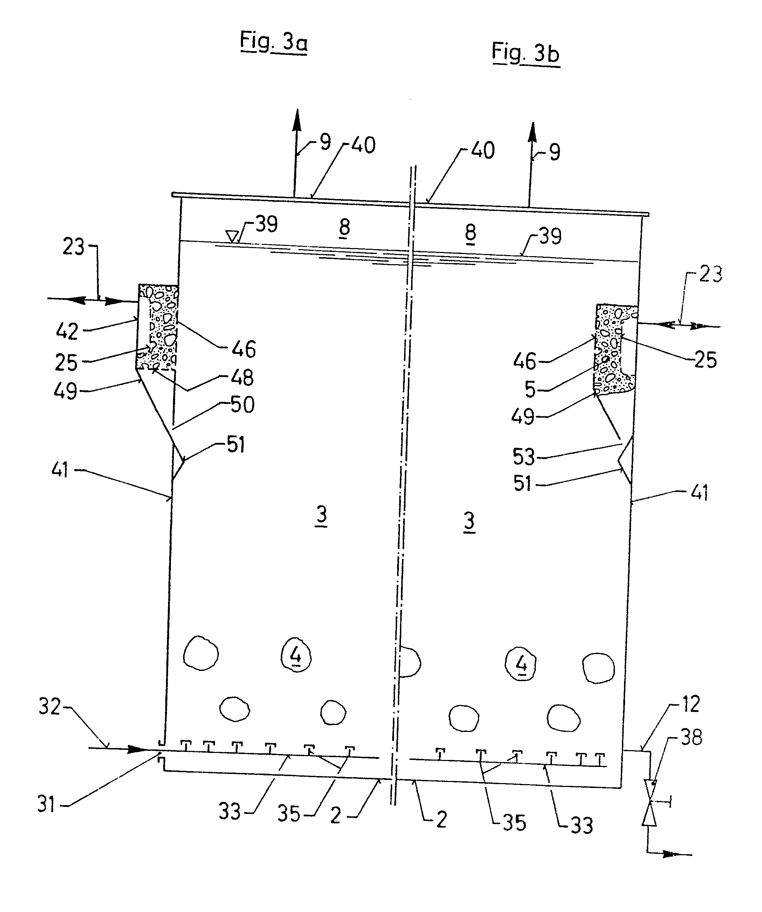

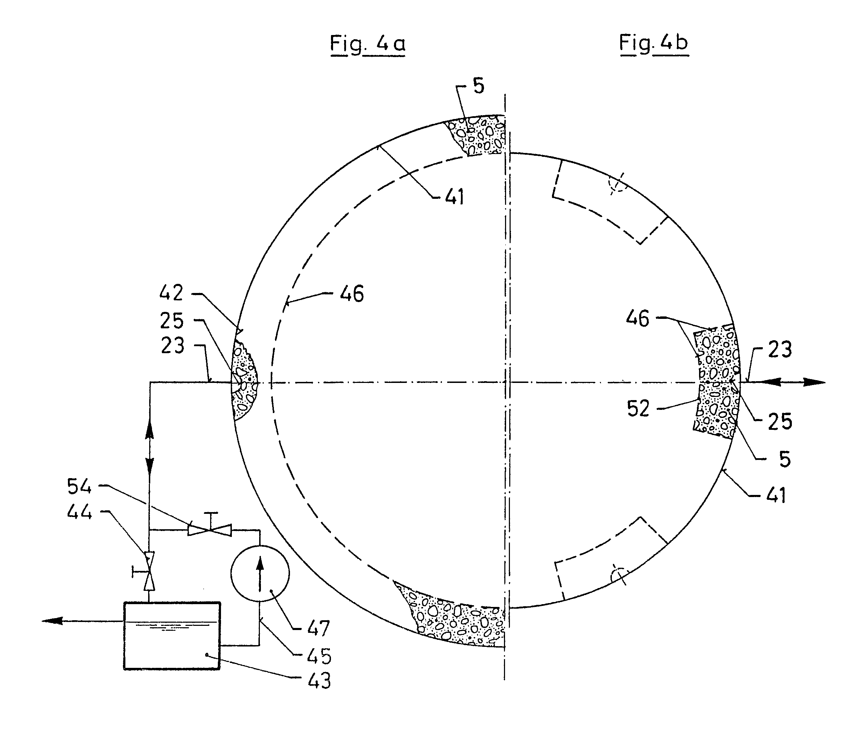

Diese Gefahr ist bei den Ausführungsbeispielen nach Fig. 3 bzw. 4a und 4b beseitigt; in diesen Beispielen, die hinsichtlich der Rohwasserzuführung und -verteilung sowie in anderen Details mit dem ersten Beispiel übereinstimmen — was durch weitgehende Verwendung gleicher Bezugszeichen verdeutlicht wird —, erfolgt die Separierung der Gase zumindest weitestgehend vor der Flüssigkeits/Schwebstoff-Trennung. Die Gase entweichen dabei aus der schwebstoffhaltigen Flüssigkeit an der freien Niveaufläche 39.

Die für die Flüssigkeits/Schwebstoff-Trennung eingesetzte Füllkörperschicht 5 befindet sich bei diesen Ausführungsformen unmittelbar am Flüssigkeitsaustritt aus dem Reaktionsgefäß 41; die Wand des Gefäßes 41 kann dabei — wie in Fig. 3a und 4a gezeigt — über einen gewissen Höhenabschnitt längs ihres Umfangs als Netz 46 ausgebildet sein, hinter dem die Füllkörper 5 in einen Ringraum 42 eingelagert sind. Von diesem führen Abflußleitungen 23, vor denen wieder ein Siebkorb 25 als Schutz gegen das Wegfließen von Füllkörpern 5 angeordnet ist, die gereinigte Flüssigkeit über ein Absperrorgan 44 (Fig. 4a) in einen Reinwassertank 43.

Für die Rückspülung der Füllkörperschicht 5 zweigt aus dem Tank 43 eine Leitung 45 ab, die über eine Rückspülpumpe 47 und ein weiteres Absperrorgan 54 wieder in eine der Leitungen 23 mündet, die gleichzeitig der Zufuhr der Rückspülflüssigkeit zur Füllkörperschicht 5 dienen; die Rückspülung der Füllkörperschicht 5 erfolgt nach einem der in der Wassertechnik üblichen Rückspülverfahren.

Sind die Füllkörper 5 spezifisch schwerer als Wasser, so ist der Ringraum 42 nach unten durch einen für die abgeschiedenen Schwebstoffe, aber nicht für die Füllkörper 5, durchlässigen Boden 48 abgeschlossen. Von ihm führt ein schräges Blech 49 zu Öffnungen 50 in der Wand des Behälters 41, durch die die zurückgehaltenen Schwebstoffe wieder in den Behälter 41 gelangen. Unterhalb der Öffnungen 50 sind Strömungsleitschikanen 51 vorgesehen, durch die im Reaktionsraum 3 aufsteigende Gase an einem Durchtritt durch die Öffnungen 50 gehindert werden.

Die Ausführungsform nach Fig. 3b bzw. 4b unterscheidet sich von dem vorstehend beschriebenen Beispiel lediglich im Detail; so ist der Ringraum 42 durch einzelne, an drei Seiten wiederum von Netzen 46 umschlossene Ausflußabschnitte 52 (Fig. 4b) ersetzt. Weiterhin sind wie im ersten Beispiel schwimmfähige Füllkörper 5 eingesetzt, so daß der Boden 48 entfallen kann. Den Öffnungen 50 in der Behälterwand entsprechen Spalte 53, die zwischen den Schrägwänden 49 und den Schikanen 51 vorhanden sind. Diese letzte Ausführungsform hat gegenüber der vorher beschriebenen den Vorteil, daß pro Volumeneinheit an Füllkörperschicht die Einströmoberfläche für die schwebstoffhaltige Flüssigkeit vergrößert ist.

**Patentansprüche**

1. Verfahren zur anaeroben Reinigung von mit organischen Stoffen belasteten Flüssigkeiten, wobei die organischen Stoffe mindestens teilweise mit Hilfe anaerober Mikroorganismen in einem Reaktionsraum abgebaut werden, wodurch ein Mehrphasen-Reaktionsgemisch aus mindestens biologisch aktivem Schlamm und der gereinigten Flüssigkeit erzeugt wird, und wobei ferner die gereinigte Flüssigkeit aus dem Reaktionsraum abgezogen wird, dadurch gekennzeichnet, daß in der abgezogenen Flüssigkeit mitgeführte Schwebstoffe bereits am Ende des von porösem Trägermaterial für Biomasse freien Reaktionsraumes (3) mit Hilfe einer Schicht (5) aus unter der Flüssigkeitsoberfläche gehaltenen Füllkörpern mit glatten Oberflächen zurückgehalten werden.

2. Verfahren nach Anspruch 1, dadurch gekennzeichnet, daß die Schwebstoffe und gegebenenfalls daran haftende Gaspartikel in der Schicht voneinander separiert werden.

3. Verfahren nach Anspruch 1, dadurch gekennzeichnet, daß ein Abtrennen von in der Flüssigkeit enthaltenen Gasen vor der Abscheidung der Schwebstoffe durchgeführt wird.

4. Verfahren nach Anspruch 1, dadurch gekennzeichnet, daß die Schicht (5) periodisch gereinigt wird.

5. Anlage zur Durchführung des Verfahrens nach Anspruch 1, dadurch gekennzeichnet, daß der Ausgang des von porösem Trägermaterial für Biomasse freien Reaktionsraums (3) für die gereinigte Flüssigkeit durch eine Schicht (5) aus Füllkörpern mit glatten Oberflächen abgeschlossen ist.

6. Anlage nach Anspruch 5, dadurch gekennzeichnet, daß die Füllkörper der Schicht (5) schwimmfähig, jedoch in der Flüssigkeit untergetaucht gehalten sind.

7. Anlage nach Anspruch 5 oder 6, dadurch gekennzeichnet, daß die Schicht (5) aus Füllkörpern mit unterschiedlichen Körnungen besteht.

8. Anlage nach Anspruch 7, dadurch gekennzeichnet, daß die Füllkörper unterschiedlicher Körnung in voneinander getrennten Lagen gehalten sind.

9. Anlage nach einem der Ansprüche 5 bis 8, dadurch gekennzeichnet, daß die Korngrößen der Füllkörper 0,5 bis 50 mm betragen.

## Claims

1. A process for the anaerobic purification of liquids laden with organic substances, the organic substances being at least partially degraded in a reaction chamber by means of anaerobic microorganisms, so that a multi-phase reaction mixture consisting of at least biologically active sludge and the purified liquid is produced, and in which in addition the purified liquid is withdrawn from the reaction chamber, characterised in that suspended matter entrained in the withdrawn liquid is already retained at the end of the reaction chamber (3) free of porous carrier material for biomass, by means of a layer (5) of smooth-surface packings held beneath the surface of the liquid.

2. A process according to claim 1, characterised in that the suspended matter and any gas particles adhering thereto are separated from one another in the layer.

3. A process according to claim 1, characterised in that gases contained in the liquid are separated before the separation of the suspended matter.

4. A process according to claim 1, characterised in that the layer (5) is periodically cleaned.

5. A plant for performing the process according to claim 1, characterised in that the outlet of the purified liquid reaction chamber (3) free of porous carrier material for biomass is closed by a layer (5) of smooth-surface packings.

6. A plant according to claim 5, characterised in that the packings of the layer (5) are floatable but are held submerged in the liquid.

7. A plant according to claim 5 or 6, characterised in that the layer (5) consists of packings with different particle sizes.

8. A plant according to claim 7, characterised in that the packings of different particle size are kept in separate layers.

9. A plant according to any one of claims 5 to 8, characterised in that the particle sizes of the packings are 0.5 to 50 mm.

## Revendications

1. Procédé de nettoyage anaérobie de liquides chargés de matières organiques, les matières organiques étant au moins partiellement décomposées dans une chambre de réaction à l'aide de micro-organismes anaérobies, ce qui produit un mélange réactionnel multiphases de boue au moins biologiquement active et du liquide purifié, le liquide purifié étant en outre retiré de la chambre de réaction, procédé caractérisé en ce que des matières en suspension entraînées dans le liquide déchargé sont retenues déjà à l'extrémité de la chambre de réaction (3) dépourvue de matière poreuse de support pour la biomasse à l'aide d'une couche (5) constituée de corps de remplissage à surfaces lisses maintenus sous la surface du liquide.

2. Procédé selon la revendication 1, caractérisé en ce que les matières en suspension et des particules de gaz qui éventuellement y adhèrent et qui se trouvent dans la couche sont séparées les unes des autres.

3. Procédé selon la revendication 1, caractérisé en ce qu'une séparation de gaz contenus dans le liquide est réalisée avant la séparation des matières en suspension.

4. Procédé selon la revendication 1, caractérisé en ce que la couche (5) est nettoyée périodiquement.

5. Installation pour mettre en oeuvre le procédé selon la revendication 1, caractérisé en ce que la sortie de la chambre de réaction (3) dépourvue de matière de support poreuse pour la biomasse et destinée au liquide purifié est fermée par une couche (5) de corps de remplissage ayant des surfaces lisses.

6. Installation selon la revendication 5, caractérisé en ce que les corps de remplissage de la couche (5) peuvent flotter, mais sont cependant maintenus immergés dans le liquide.

7. Installation selon la revendication 5 ou la revendication 6, caractérisé en ce que la couche

(5) est constituée par des corps de remplissage ayant des granulations différentes.

8. Installation selon la revendication 7, caractérisé en ce que les corps de remplissage de granulation différente sont maintenus dans des couches séparées les unes des autres.

9. Installation selon l'une des revendications 5 à 8, caractérisée en ce que les dimensions des grains des corps de remplissage sont de 0,5 à 50 mm.

Fig.1

0 058 247

## Fig.2

Fig. 3a    Fig. 3b

Fig. 4a    Fig. 4b